(19) Europäisches Patentamt
European Patent Office
Office européen des brevets

(11) Publication number: 0 017 240
B1

(12) # EUROPEAN PATENT SPECIFICATION

(45) Date of publication of patent specification: 21.03.84

(51) Int. Cl.³: G 02 F 1/133, G 02 F 1/137

(21) Application number: 80101805.2

(22) Date of filing: 03.04.80

(54) **Liquid crystal display device.**

(30) Priority: 06.04.79 JP 41573/79

(43) Date of publication of application:
15.10.80 Bulletin 80/21

(45) Publication of the grant of the patent:
21.03.84 Bulletin 84/12

(84) Designated Contracting States:
CH DE FR GB IT LI NL

(56) References cited:
US - A - 3 569 614
US - A - 3 687 515
US - A - 4 097 130

PATENT ABSTRACT OF JAPAN, vol. 2, no. 11, January 26, 1978 page 10558E77
PATENT ABSTRACT OF JAPAN, vol. 3, no. 70, (E-117), June 16, 1979 page 79E117
PATENT ABSTRACT OF JAPAN, vol. 3, no. 70, (E-117), June 16, 1979 page 79E117

(73) Proprietor: Stanley Electric Co., Ltd.
2-9-13, Nakameguro
Meguro-ku Tokyo (JP)

(72) Inventor: Teshima, Toru
4606-4, Motoishikawa-cho
Midori-ku Yokohama-shi, Kanagawa-ken (JP)
Inventor: Ariga, Kazuo
2-2-2-113, Shimoochiai
Shinjuku-ku Tokyo-to (JP)
Inventor: Kasahara, Takao
5-13-9, Misono
Sagamihara-shi Kanagawa-ken (JP)

(74) Representative: Goddar, Heinz J., Dr. et al,
FORRESTER & BOEHMERT Widenmayerstrasse 4/I
D-8000 München 22 (DE)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 017 240 B1

Liquid crystal display device

The invention relates to a liquid crystal display device, wherein the display comprises at least two segments filled with liquid crystals of different absorption spectra which are separately displayed.

Liquid crystal displays of different colours are already known, e.g. from JP—A—52—128161, which discloses a display surface, which is divided into two sections in order to obtain independent displays.

Liquid crystals, which are different, are injected into each one of these cells, and an excellent two colour display can be performed. Nevertheless, in such a two colour-display no mixing of colours to give a third colour was intended or possible.

In US—A 3 687 515 a display with different sections is shown for use as a bi-refringence-shutter-system. There is no hint for arranging for differently coloured nematic substances to get a coloured picture, only the colour itself may be varied by the strength of the electrical field applied. The arrangement of electrodes is due to the fact, that otherwise the necessary strength of electrical field cannot be obtained, because the electrical field is a function of the reciprocal of the distance of the electrodes.

With this known arrangement of cells of different colours it was not possible to obtain a mixing of these two colours by placing them close together, as it is known from colour TV screens or colour printing techniques.

It is the task of the invention to provide a liquid crystal display device for displaying a single display pattern, in a plurality of colours without substantially changing the position of the displayed pattern and the optical mixing of two colours to give a third colour, can take place.

The invention as claimed is intended to remove these drawbacks. It solves the problem of how to design a liquid crystal display device, where the colours are arranged that way, so that they may be combined to give a new colour. There is provided a plurality of segments, in which alternately liquid crystals with different absorption spectra are sealed, example given, red and green liquid crystals are sealed in neighbouring segments. As functional effect of this geometrical arrangement, a mixed colour display can be obtained, when the red and green liquid crystals are simultaneously displayed, but also a single colour display of either red or green colour may be shown. The present invention provides a liquid crystal display device, wherein each part of display section providing a desired display pattern comprises a collective body of a plurality of segments, liquid crystals of different absorption spectra are sealed in adjacent segments, and each segment is displayed selectively, so that a display of different colours in a single display pattern can be obtained without substantially changing the position of the pattern.

In this device, the segments are separated by a spacer selective electrodes are disposed in a manner corresponding to the display pattern formed by these segments, and these electrodes conduct for selecting the display colours so that the single display pattern can be displayed in different colours. Further, in this device, selective electrodes may be arranged in a matrix form, and points of intersection are selectively turned on for enabling a dotted display. Thus, a multi-colour display with a single display pattern is possible without changing the position of the pattern.

The present invention will now be described with reference to its embodiments shown in the accompanying drawings.

Fig. 1 is a view illustrating a first embodiment of a liquid crystal display device according to the present invention; it is a sectional view of part of a display section wherein the display pattern is bar-shaped.

Fig. 2 is a plan view of the display pattern of the display section shown in Fig. 1.

Fig. 3 is a plan view of a second embodiment of the present invention illustrating a display section with a bar-shaped display pattern wherein the shape of the spacer is changed.

Fig. 4 is a pattern diagram showing selective electrodes which may be used in both the first and second embodiments of the present invention.

Fig. 5 is a plan view of a third embodiment of the present invention illustrating a display pattern using three display colours.

Fig. 6 is a plan view illustrating a display pattern of a different shape with the same colours as shown in the third embodiment.

Fig. 7 is a pattern diagram illustrating the selective electrodes of the third embodiment.

Fig. 8 is a plan view of the display pattern wherein the liquid crystal display device of the present invention is utilized for displaying digits with seven segments.

Fig. 9 is a pattern diagram illustrating the selective electrodes of the display pattern shown in Fig. 8.

Fig. 10 is a pattern diagram of selective electrodes when the liquid crystal device is utilized for matrix display.

Fig. 11 is a schematic view showing the relation between the segments and the selective electrodes in the case of matrix display.

Fig. 12 is a sectional view along the line XII—XII of Fig. 11.

Referring to the drawings, a first embodiment of the present invention is shown in Figs. 1 and 2 wherein bar graphs are displayed, and a plurality of segments collectively show a pattern of one bar graph. In these figures, numerals 1 and 2 denote transparent glass plates, and 1a denotes a common electrode formed over substantially the entire surface of the transparent glass plates. Numerals 2a and 2b are bar-shaped selective electrodes which are formed over one face of the transparent glass plate 2 and separated by a spacer 3.

The spacer 3, as shown by the top view of Fig. 2, forms segments 3a and 3b constituting a plurality of chambers divided in a zig-zag manner.

This spacer is formed by screen printing a material such as glass of low melting temperature over a surface of the transparent glass plate 2. For integrally forming the transparent glass plates 1 and 2 with the spacer 3 interposed therebetween, the spacer 3 is formed over one surface of the transparent glass plate 2 by the above-mentioned method, the transparent glass plate 1 is superposed thereover, and firing is performed. Before this, a common electrode 1a is formed on the transparent glass plate 1, and bar-shaped selective electrodes 2a and 2b are alternately formed over the transparent glass plate 2 as shown in Fig. 4.

At one end of each of the segments 3a and 3b is formed an opening 3a′ or 3b′ which is not surrounded by the transparent glass plates 1 and 2. Thus, liquid crystals of different absorption spectra are sealed in the chambers through these openings.

For example, red liquid crystal may be sealed in through the opening 3a′, and green liquid crystal sealed in through the opening 3b′. Red liquid crystal is then sealed in the next chamber and so on, so that liquid crystals of two different colours are alternately sealed in the chambers. After sealing the liquid crystal, an epoxy resin is applied or a metallizing processing is performed and, thereafter, the openings are sealed a final time by indium soldering.

The width of the segments 3a and 3b divided by the spacer 3 preferably exceeds the resolution ability of the human eye, for example, within the range of 0.05 to 0.1 mm. The width of the spacer 3 for forming the segments is preferably in the same range or below this range. By choosing the width in this manner, a bar-shaped display of red and green colours can be obtained when bar-shaped selective electrodes 2a and 2b disposed in separated segments are sequentially made to conduct. When only the segments with red liquid crystal are selectively turned on by their electrodes, a red bar-shaped display can be obtained. Similarly, when the segments with green liquid crystal alone are selectively illuminated, a green bar-shaped display can be obtained. By arranging a plurality of liquid crystals obtained in this manner, one next to another, bar-shaped graphs using liquid crystal can be easily obtained. Since each segment is close to the next in this case, no substantial position shift will occur, even when the display is switched from the green display to the red display or when the display mixes colours. Thus, recognition of the display is facilitated.

Fig. 3 shows a second embodiment of the present invention wherein the shape of the spacer 3 is modified. This embodiment is different from the first embodiment in that only one opening is used for sealing liquid crystal of one absorption spectrum. In this case, the sealing operation of the liquid crystals is easy, and sealing of the openings is easy since only two openings must be sealed. Thus, the working process for manufacturing the device can be simplified. For manufacturing the spacer 3, screen printing can be utilized as in the case of the first embodiment. The bar-shaped selective electrodes alternately formed for each segment 3a and 3b are dot-formed in the path of flow of the liquid crystal. Thus, it is possible to obtain a bar-shaped display or to arrange a plurality of these devices one next to another as in the case of the first embodiment.

Fig. 5 shows an example of a spacer which permits liquid crystals of three different colours to be be sealed. This example is different from the second embodiment in that a further independent segment 3c is formed in addition to the segments 3a and 3b divided by the spacer 3. In this example, an opening 3c′ is formed by a hole in the transparent glass plate 1 to be used as an opening for sealing liquid crystal in the segment 3c. By sequentially sealing liquid crystals of three different colours in each segment 3a, 3b or 3c, a mixed colour display or a display of a single colour may be obtained.

Fig. 6 shows another modification of the device which includes liquid crystals of three different colours. This example is different from the above example in that the sealing of each liquid crystal can be accomplished without forming an opening in the transparent glass plate 1. That is, a further segment 3c is formed in a zig-zag manner between the segment 3a and other segment 3b, so that the three segments are adjacent. With this construction, since the openings 3a′, 3b′ and 3c′ can be formed without forming holes in the transparent glass plate 1, manufacturing process is facilitated. Selective electrodes for each segment for three colour display can be arranged as shown in Fig. 7. That is, a selective electrode 2c corresponding to a segment 3c is interposed between the selective electrode 2a for the segment 3a and the selective electrode 2b for the segment 3b.

In the examples shown above, a plurality of separate segments are formed by linearly dividing a display surface by a spacer and liquid crystals of different absorption spectra are sealed in adjacent segments, so that displays of different colours or mixed colours can be obtained. By arranging a plurality of such devices, one next to the other, a graph display, such as a bar-shaped graph, is made possible. Further, since each segment in all of the above-mentioned examples is adjacent to the next in their longitudinal directions, no substantial shift in the position of the display will occur in displaying with only one colour or with mixed colours.

Fig. 8 shows another embodiment wherein the device is utilized as a digit display device having seven display parts. In this embodiment, the spacer 3 is arranged in a zig-zag manner as shown in the figure. Each part of the digit display is formed by a group of segments, and the space between the groups of segments is set to be sufficiently small, for example, within the range of 0.05 to 0.1 mm.

For forming a digit display of seven parts, the vertical and transverse lines are formed by a plurality of groups of segments. When the dividing panel 3′ of the spacer 3 is formed in a zig-zag manner, two segments 4a and two segments 4b are grouped in a group of four for transverse lines of the digits. Four segments 4a and four segments 4b are grouped in a group of eight for vertical lines. Liquid crystal of one colour is sealed in the segments 4a. Liquid crystal of a different colour is sealed in the segments 4b. For example, red liquid crystal is sealed in the segments 4a, and green liquid crystal is sealed in the segments 4b, so that colours of adjacent segments are different. 4c and 4d are openings formed in opposite sides of the spacer 3.

As shown in Fig. 9, selective electrodes 5a and 5b are formed in their respective segments. That is, in the groups A, D and G for displaying transverse lines, two each of the selective electrodes 5a and 5b are alternately disposed. A voltage is applied across the electrodes 5a and 5b respectively at the conductive terminals a, a′, d, d′, g and g′. The groups B, C, E and F, for displaying the vertical lines, include alternate electrodes 5a and 5b, each four in number. A voltage is applied across the electrodes 5a and 5b respectively at the conductive terminals b, b′, c, c′, e, e′, f and f′. When red liquid crystal is, for example, sealed in the segments 4a, a red display is produced when a voltage is applied to the conductive terminals a to g. When green liquid crystal is sealed in the segments 4b, a green display is produced when a voltage is applied across the conductive terminals a′ to g′.

Therefore, for displaying the digit 1, the segments of the B group electrodes and the segments of the C group electrodes are turned on. For displaying the number 1 in red, a voltage is applied to the conductive terminals b and c. A voltage is applied to the conductive terminals b′ and c′ for displaying the digit 1 in green. In the case of the digit 4, the segments of groups B, C, G and F are turned on. When a voltage is applied to the terminals b, c, g and f, the number is displayed in red. When a voltage is applied to the terminals b′, c′, g′ and f′, the digit 4 is displayed in green. Therefore, the position of the display is not substantially changed even when the colour of the display is varied. When each part of the display section is formed by a group of segments, corresponding groups of electrodes are disposed in each group of segments, and the colours of the liquid crystals sealed in each adjacent segment are made different so that selective multi-colour displays and mixed colour displays are made possible.

When the device is used for a calculator display, for example, the device may be used in various ways, such as for changing the display colour when the digits overflow the display.

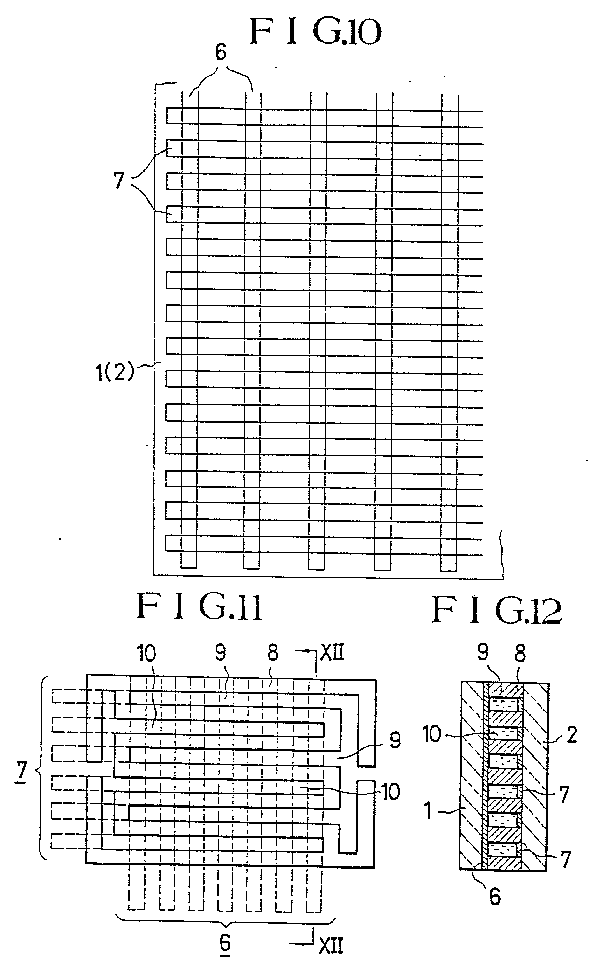

Fig. 10 shows a display device which is capable of dot displaying in a matrix form. As in a usual liquid crystal display device, vertical line-shaped electrodes 6 are formed on the inner surface of one of a pair of transparent glass plates, and transverse line-shaped electrodes 7 are formed on the inner surface of the other transparent glass plate. A spacer 8 is constructed, as shown in detail in Fig. 11, so that line-shaped segment groups 9 and 10 are alternately disposed. By sealing liquid crystals of different colours in the segment groups 9 and 10, two different colours alternately appear vertically, and a single colour appears transversely, so that a dotted display can be obtained. In disposing the line-shaped electrodes 6 and 7, the vertical line-shaped electrodes 6 are disposed on one of the glass plates 1, and the transverse line-shaped electrodes 7 are disposed on the other glass plate 7, as shown in Fig. 12, for forming a matrix.

That is, by selectively applying a voltage to one of the line-shaped electrodes 6 and one of the line-shaped electrodes 7, the liquid crystal at the points of intersection is illuminated so that a dotted display is obtained.

Therefore, when the width of the line-shaped segments 9 and 10 is sufficiently narrowed for forming a number of segments, and when the line-shaped electrodes 7 are disposed so as to correspond to each segment and the line-shaped electrodes 6 are similarly arranged, a wide variety of dotted displays can be obtained. By selectively applying a voltage to the line-electrodes 6 and 7, any desired pattern may be obtained. Again, in this case, the position of the display will not appear substantially to change, even when a single pattern is switched to another colour or to a display of mixed colour.

As may be apparent from the above description, in the device according to the present invention, each part of the display pattern is disposed adjacent to another part, and each part comprises a plurality of segments whose widths are sufficiently small. Liquid crystals of different absorption spectra are then sealed in adjacent segments. Thus, a mixed colour display or a display of a single colour can be easily obtained. Further, the position of the display will not be substantially changed within the same pattern even when the display colour is changed.

Although the present invention has been described with reference to display devices for bar-shaped graphs or for digit display devices of seven parts, in addition to pattern display in a matrix form, it is to be understood that the present invention is applicable to other devices, such as warning devices which give a warning by changing the display colour, meter displays for various measuring devices, and speedometers for automobiles.

**Claims**

1. A liquid crystal display device, wherein the display comprises at least two segments filled with liquid crystals of different absorption spectra which are separately displayed, characterized in that each part of a display section exhibiting a desired display pattern comprises a collective body of a plurality of segments (3a, 3b, 4a, 4b) which are interlaced with each other; that the liquid crystals of different absorption spectra are sealed in adjacent segments; and that individual or collective electrodes (2a, 2b, 2c; 5a, 5b) are provided for each of said segments (3a, 3b; 4a, 4b) so that segments of different colours may be turned on separately or simultaneously.

2. A liquid crystal display device, wherein the display comprises at least two segments filled with liquid crystals of different absorption spectra which are separately displayed, characterized in that each part of a display section exhibiting a desired display pattern comprises a collective body of a plurality of segments (9, 10); that the liquid crystals of different absorption spectra are sealed in adjacent segments; and that a number of line-shaped electrodes (6, 7) are arranged in a matrix form on both sides of said segments so that a dotted display of a desired colour can be obtained by turning on the segments separately or simultaneously.

**Revendications**

1. Dispositif d'affichage à cristaux liquides, dans lequel l'affichage comprend au moins deux segments remplis de cristaux liquides à spectres d'absorption différents, qui sont affichés séparément, caractérisé par le fait que chaque partie d'une section d'affichage présentant un modèle d'affichage désiré comprend un corps collectif d'une pluralité de segments (3a, 3b, 4a, 4b) qui sont entrelacés les uns avec les autres; que les cristaux liquides de spectres d'absorption différents sont scellés en segments adjacents, et qu'il est prévu des électrodes individuelles ou collectives (2a, 2b, 2c; 5a, 5b) pour chacun de ces segments (3a, 3b; 4a, 4b) de manière que des segments de couleurs différentes peuvent être excités séparément ou simultanément.

2. Dispositif d'affichage à cristaux liquides, dans lequel l'affichage comprend au moins deux segments remplis de cristaux liquides à spectres d'absorption différents, qui sont affichés séparément, caractérisé par le fait que chaque partie d'une section d'affichage présentant un modèle d'affichage désiré comprend un corps collectif d'une pluralité de segments (9, 10); que les cristaux liquides de spectres d'absorption différents sont scellés en segments adjacents; et qu'un nombre d'électrodes, en forme de ligne (6, 7), sont disposées sous forme de matrice des deux côtés des dits segments, de sorte qu'un affichage possible d'une couleur désirée peut être obtenu en excitant les segments séparément ou simultanément.

**Patentansprüche**

1. Flüssigkristall-Display, bei dem das Display zumindest zwei Segmente aufweist, welche mit Flüssigkristallmaterial mit unterschiedlichen Absorptionsspektren gefüllt sind, die getrennt zur Anzeige gebracht werden, dadurch gekennzeichnet, daß jeder Teil eines Display-Abschnittes, welcher ein gewünschtes Display-Bild zeigt, einen gemeinsamen Körper aus einer Vielzahl von Segmenten (3a, 3b, 4a, 4b) aufweist, welche einander überlappen; daß die Flüssigkristallmaterialien mit unterschiedlichen Absorptionsspektren in benachbarten Segmenten eingeschlossen sind; und daß einzelne oder mehrere Elektroden (2a, 2b, 2c; 5a, 5b) für jedes der genannten Segmente (3a, 3b; 4a, 4b) vorgesehen sind, so daß Segmente mit unterschiedlichen Farben einzeln oder gleichzeitig anstellbar sind.

2. Flüssigkristall-Display mit zumindest zwei Segmenten, die mit Flüssigkristallmaterial mit unterschiedlichen Absorptionsspektren gefüllt sind, welche getrennt zur Anzeige gebracht werden, dadurch gekennzeichnet, daß jeder Teil eines Display-Abschnittes, welcher ein gewünschtes Display-Bild zeigt, einen gemeinsamen Körper aus einer Vielzahl von Segmenten (9, 10) aufweist; daß die Flüssigkristallmaterialen mit unterschiedlichen Absorptionsspektren in benachbarten Segmenten eingeschlossen sind; und daß eine Anzahl von langgestreckten Elektroden (6, 7) in Matrix-Form auf beiden Seiten der genannten Segmente angeordnet sind, so daß eine gestrichelte Anzeige mit gewünschter Farbe dadurch erreichbar ist, daß die Segmente einzeln oder gleichzeitig angestellt werden.

FIG.1

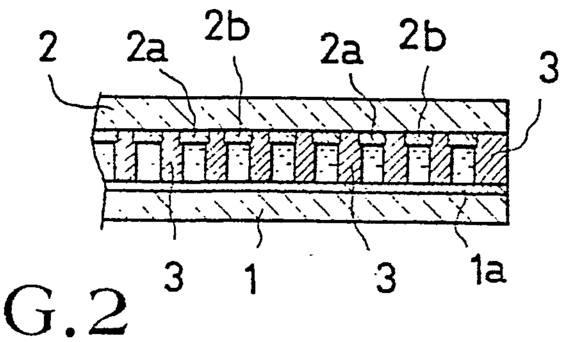


FIG.2

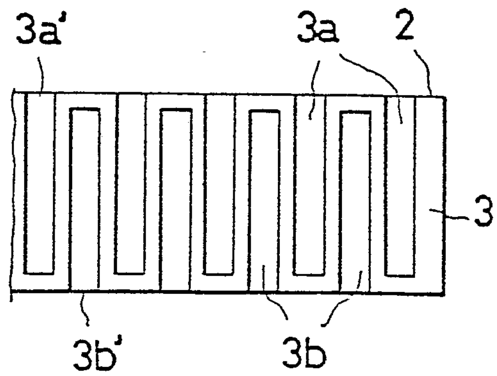


FIG.4

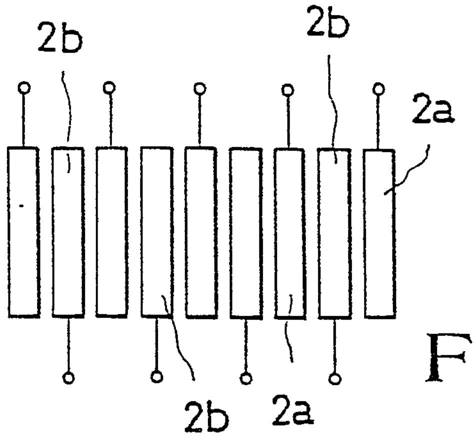


FIG.3

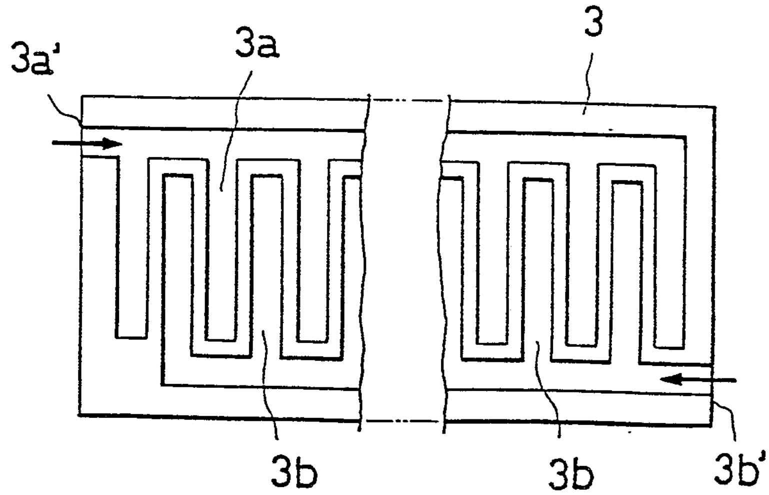

FIG.5

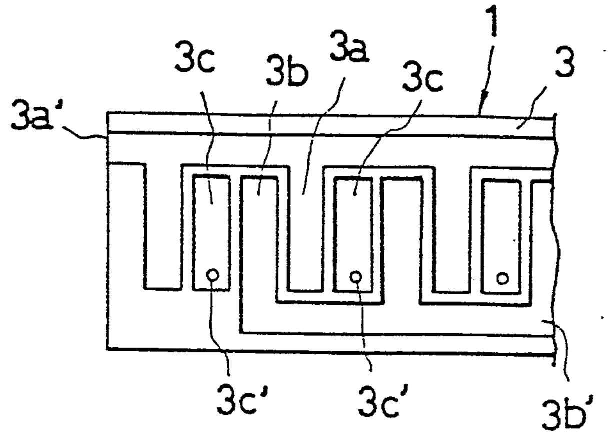


FIG.6

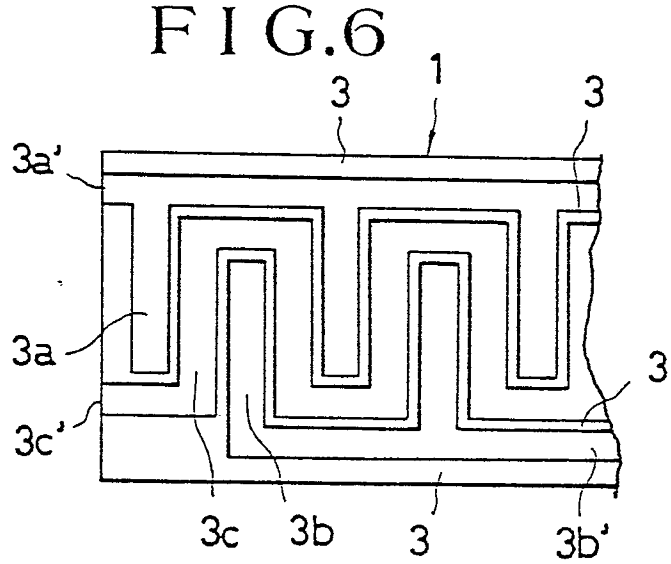


FIG.7

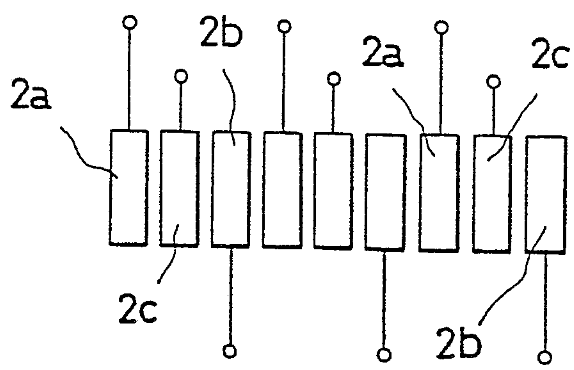

FIG.9

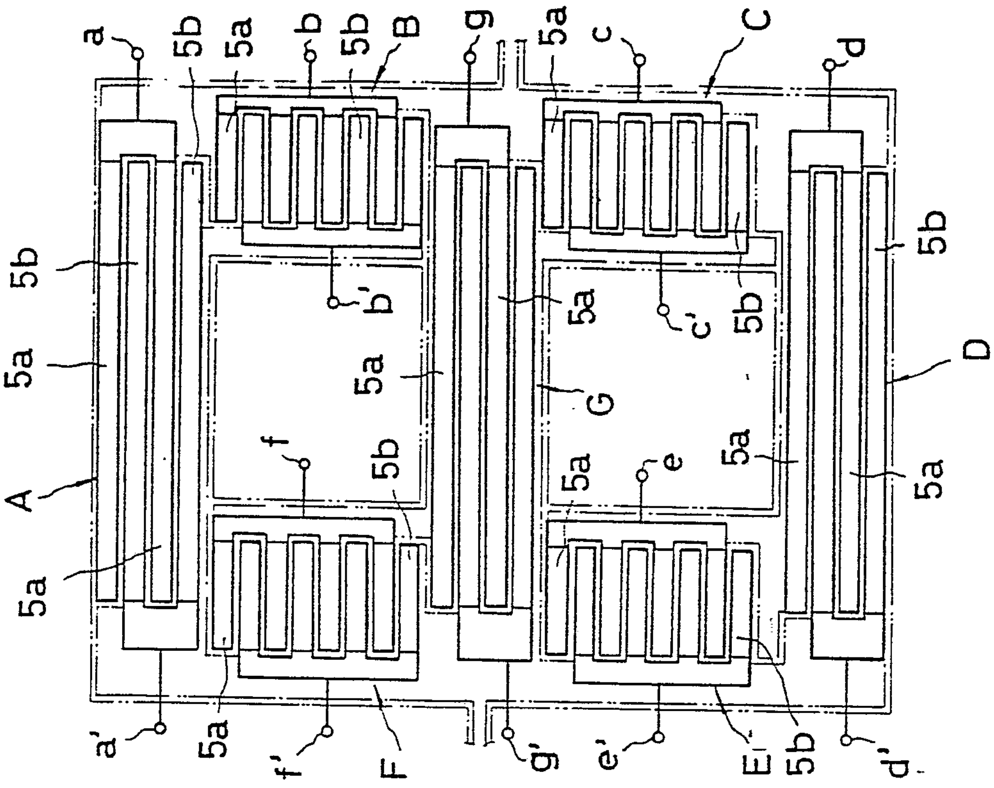


FIG.8

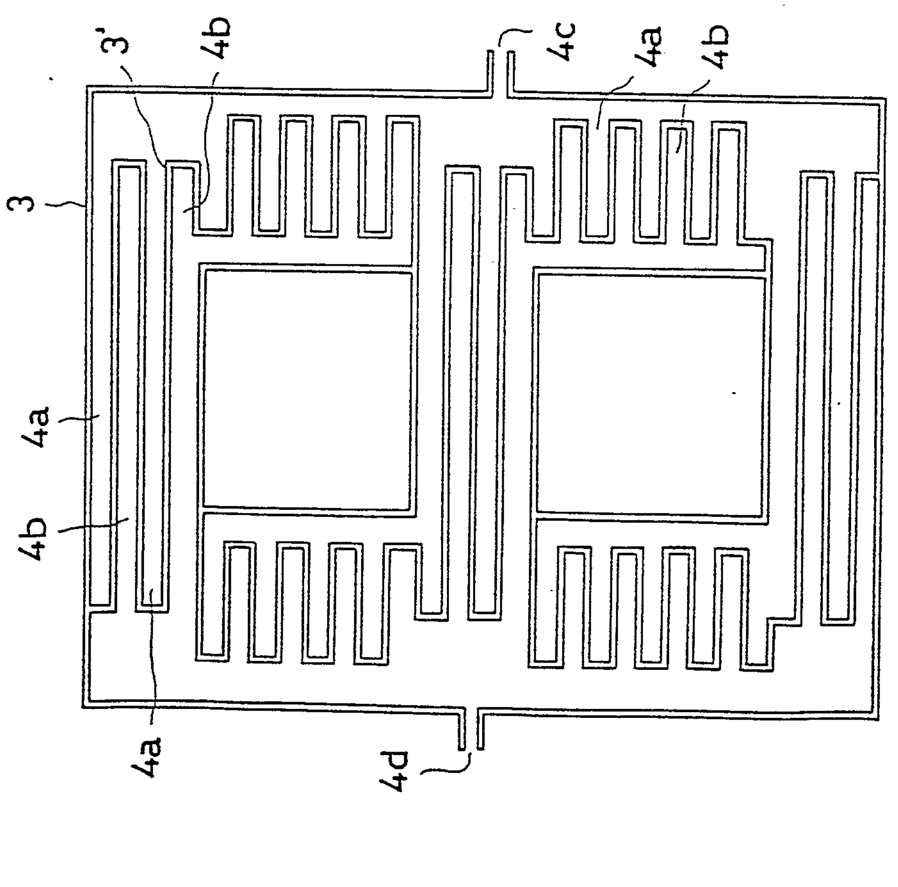

F I G.10

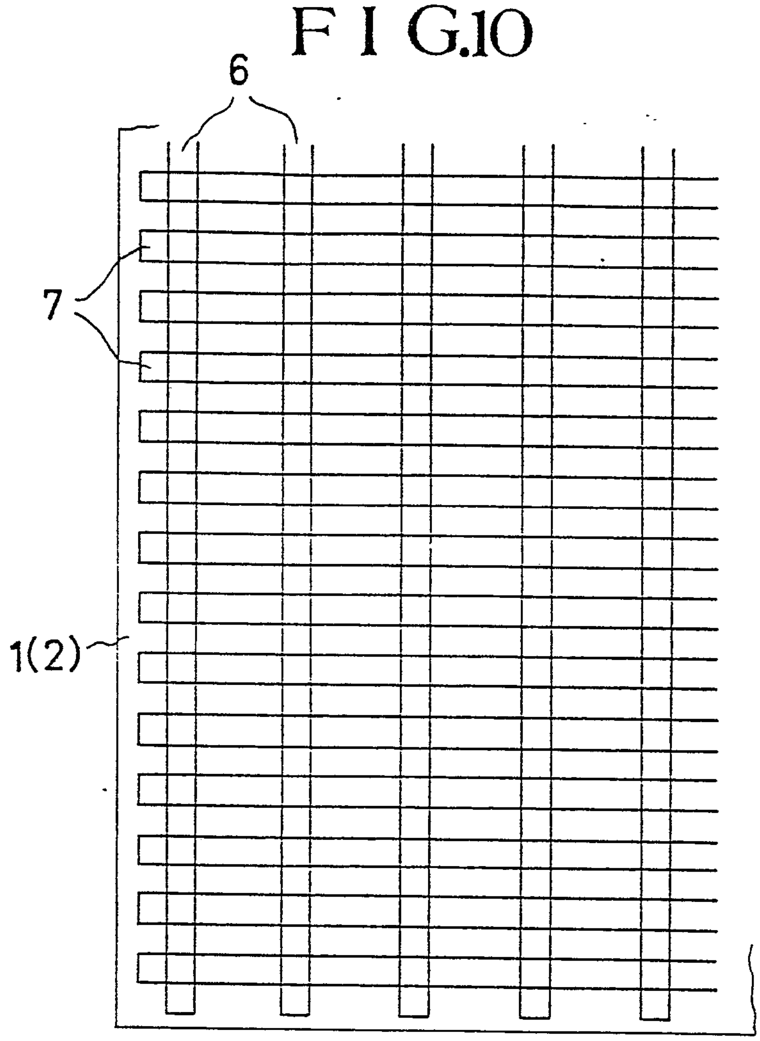


F I G.11

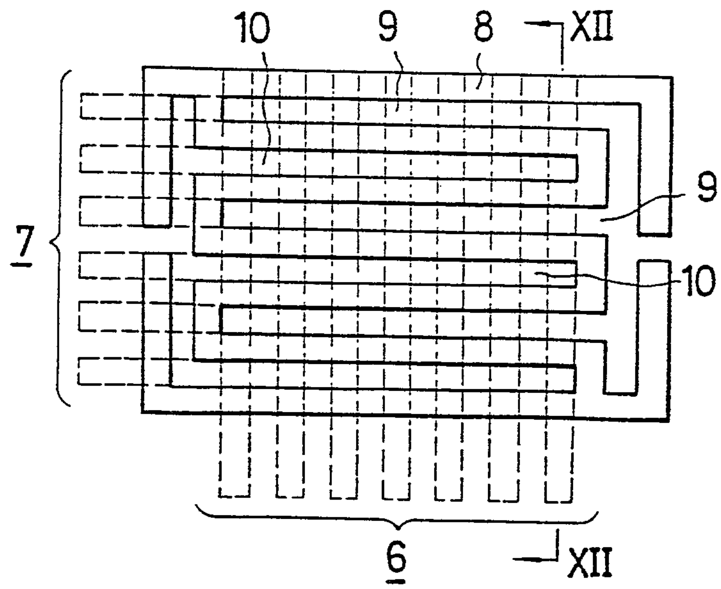


F I G.12